# EUROPÄISCHE PATENTANMELDUNG

(11) **EP 4 155 506 A1**
(43) Veröffentlichungstag der Anmeldung: **29.03.2023**
(21) Anmeldenummer: 21020484.8
(22) Anmeldetag: 26.09.2021
(51) Int. Cl.: F01D 17/16, F02C 9/20, F02K 3/06, F01D 5/14

(54) **EFFIZIENTE SCHUBKRAFTERZEUGUNG**

(71) Anmelder: Schwarze, Malte, 59071 Hamm (DE)
(72) Erfinder: Schwarze, Malte, 59071 Hamm (DE)

(57) **Zusammenfassung**

Vorliegende Zusammenfassung bezieht sich auf den Titel: Effiziente Schubkrafterzeugung.

Das technische Gebiet liegt auf dem Gebiet der Schuberzeugung durch Rückstoß eines Fluids. Aufgabe ist es unter anderem die Schuberzeugung effizient zu machen.

Dies gelingt durch ein Triebwerksanordnung mit mindestens einem beschaufelten Rotor, auf welchen mindestens eine Antriebsleistung aufgekoppelt werden kann, mit der Folge, dass zumindest eine Druckänderung in einem Teil des Fluides hervorgerufen werden kann, mit der Folge, dass sich mindestens ein Fluidmassenstrom bewegen kann, wobei in mindestens einem der bewegten Fluidmassenströme mindestens eine Statoreinrichtung angeordnet ist, wobei diese Statoranordnung mindestens ein Blatt umfasst, welches im Einstellwinkel veränderbar ist, so, dass mindestens dieses in Bezug zur fluiddynamischen Strömung des mindestens einen beschaufelten Rotors so angeströmt werden kann, dass das Blatt eine resultierende Strömungskraft erzeugen kann, die eine Kraftkomponente in Richtung der resultierenden Saugkraft oder in Richtung der Drehachse des beschaufelten Rotors hat.

## Beschreibung

Es sind Einrichtungen bekannt, die durch Fluidbewegung Schub verursachen können. Diese Einrichtungen werden oft als Triebwerke bezeichnet.

An Fahrzeugen angebracht können diese eine Vortriebskraft, Bremskraft, Auftriebskraft oder Manöverkraft erzeugen, die geeignet sein kann ein Fahrzeug zu bewegen oder aber auch entgegen der Gewichtskraft schweben zu lassen.

Im Prinzip können diese Einrichtungen an jeder Art von Fahrzeugen Wirkung entfalten, wie an Landfahrzeugen, Luftfahrzeugen und Wasserfahrzeugen sowie Raumfahrzeugen. Das Fluid kann dabei als Beispiel zumindest zum Teil aus Luft oder Wasser ausgebildet sein, aber auch durch jedes andere Gas, Flüssigkeit oder auch aus einer Suspension gebildet werden.

Dem Stand der Technik nach ist es bekannt, den Schub über einen Propulsor im Fluid zu erwirken. Dieser Propulsor hat dem Stand der Technik nach oft ein bis mehrere fluiddynamisch ausgestaltet Blätter und rotiert so häufig als beschaufelter Rotor unter Energieabgabe im Fluid so, dass er eine Druck und- oder Geschwindigkeitsänderung im Fluid bewirkt, mit der Wirkung, dass sich ein Massenstrom im Fluids bewegt und über das Prinzip actio gleich reactio eine Kraft auf den Propulsor zurückwirkt, die als Schub wirksam wird.

Dieser Propulsor kann als Propeller, Luft- oder Wasserschraube, Fan, Propfan, Open-Rotor etc. ausgebildet sein in dem Verständnis, dass er propulsiv wirksam sein kann.

Durch die Rotation eines Propulsors entsteht im Fluid -stromaufwärts und besonders stromabwärts des rotierenden Propulsors - ebenfalls eine Rotation im Fluid, die oft als Drall oder Drallkomponente bezeichnet wird. Diese enthält Energie, die im Fluid zunächst bestehen bleibt und erst allmählich durch Dämpfungs- und Reibungsvorgänge im Fluid zum Erliegen kommt. Ungenutzt entspricht diese einem Energieverlust, der sich energetisch unvorteilhaft auf eine effiziente Erzeugung von Schub im Fluid beispielsweise zur Vortriebserzeugung auswirkt.

Stand der Technik ist es, dass dem Propulsor stromabwärts, ein Stator nachgeschaltet ist, der den Fluidmassenstom mehr oder weniger in seiner Abströmung "begradigt" in dem Sinne, dass die Abströmung des Fluidmassenstroms unter weniger Drall und in die Richtung antiparallel zur Zuströmung des Propulsors und einheitlich in einer Richtung erfolgt, so, dass die Schubkraft durch die Abströmung des Fluides in die selbe Richtung wirkt, wie die Kraft in der Zuströmung, die durch den Propulsor stromaufwärts durch seine Sogwirkung erzeugt wird.

Es sind Turbofantriebwerke zum Antrieb von Luftahrzeugen bekannt.

Ein Turbofantriebwerk gilt als ein umhülltes Triebwerk. Ein Triebwerk bei dem durch zumindest ein Bauteil der Fan mit seinem Nebenstrom nach außen hin umhüllt wird, zum Beispiel durch die Triebwerksgondel.

In einem Turbofantriebwerk bewegt ein beschaufelter Rotor, der als Fan bezeichnet wird, im Kernund besonders im Nebenstrom jeweils Fluidmassenströme, die am Ende des Triebwerks durch geeignete Düsen schubwirksam wieder aus dem Triebwerk austreten.

Im Nebenstrom ist dem Fan als Propulsors oft ein Stator nachgeschaltet, der die Fluidmassenströmung vor dem Durchlauf der Düse begradigt. Die Abströmung des Fluidmassenstroms hinter dem Stator erfolgt somit richtungsgleich. Ziel ist es, die Abströmung durch den Stator zu begradigen, dem Verständnis einer Repetierstufe einer Turbomaschine nach, möglichst drallfrei, mit Abströmung einheitlich in eine Richtung.

Zusätzlich weist der Stator ein Diffusorgitter auf, und trägt damit noch vor dem Durchströmen der Düse zur Druckerhöhung im Fluid bei. Ziel ist es noch vor dem Durchströmen der Düse den Druck im Fluid zu erhöhen. Ein möglichst hoher Druck vor dem Durchströmen der Düse führt zu einer vorteilhaft hohen Geschwindigkeit am Düsenaustrittsende so, dass er Schub durch die Geschwindigkeitserhöhung möglichst hoch ausfällt.

Dem Verständnis einer Repetierstufe bildet der Propulsor, also der Fan, das Laufgitter, während der Stator das Leitgitter ausbildet, mit dem Ziel der Druckerhöhung des Fluides vor dem Durchlaufen der Düse.

Nachteil ist es, das bisherige Einrichtungen zur Erzeugung einer Schubkraft über Bewegung eines Fluidmassenstroms nach wie vor viel Energie, Leistung bzw. Treibstoff benötigen, um eine bestimmte Kraft hervorzurufen. Zudem kann die Erzeugung der Kraft begleitet sein durch schädliche Emissionen in Form gesundheitsschädlicher Emissionen und Treibhausgase.

Aufgabe der Erfindung ist es daher eine Einrichtung zur Erzeugung einer Schubkraft über einen Fluidmassenstrom bereitzustellen, die bezogen auf eine eingebrachte Energie- oder Leistungseinheit mehr Schub zur Verfügung stellen kann, damit energieeffizienter und umweltfreundlicher arbeitet.

Gemäß eines ersten Aspektes der Erfindung wird die Aufgabe gelöst, durch:
1. Mindestens ein beschaufelter Rotor BR als Bestandteil einer Triebwerksanordnung E , auf welchen mindestens eine Antriebsleistung P aufgekoppelt werden kann, und, welcher durch Rotation in einem Fluid F zumindest eine Druckänderung in einem Teil des Fluides PF hervorrufen kann mit der Folge, dass sich mindestens ein Fluidmassenstrom FMS bewegen kann, wobei
   in mindestens einem der bewegten Fluidmassenströme mindestens eine Statoreinrichtung SD angeordnet ist, dadurch gekennzeichnet, dass:
   diese Statoranordnung SD mindestens ein Blatt B umfasst, welches im Einstellwinkel AI veränderbar ist, so, dass es in Bezug zur fluiddynamischen Abströmung VR des mindestens einen beschaufelten Rotors BR so angeströmt werden kann, dass das Blatt B eine resultierende Strömungskraft RF erzeugen kann, die eine Kraftkomponente VOR in Richtung der resultierenden Saugkraft SFR des beschaufelten Rotors BR hat.

Gemäß eines zweiten Aspektes der Erfindung wird die Aufgabe gelöst, durch:
2. Mindestens ein beschaufelter Rotor BR als Bestandteil einer Triebwerksanordnung E , auf welchen mindestens eine Antriebsleistung P aufgekoppelt werden kann, und, welcher durch Rotation in einem Fluid F zumindest eine Druckänderung in einem Teil des Fluides PF hervorrufen kann mit der Folge, dass sich mindestens ein Fluidmassenstrom FMS bewegen kann, wobei in mindestens einem der bewegten Fluidmassenströme mindestens eine Statoreinrichtung SD angeordnet ist, dadurch gekennzeichnet, dass:
diese Statoranordnung SD mindestens ein Blatt B umfasst, welches im Einstellwinkel AI veränderbar ist, so, dass es in Bezug zur fluiddynamischen Zuströmung VE des mindestens einen beschaufelten Rotors BR so angeströmt werden kann, dass das Blatt B eine resultierende Strömungskraft RF erzeugen kann, die eine Kraftkomponente VOR in Richtung der resultierenden Saugkraft SFR des beschaufelten Rotors BR hat.

Gemäß eines dritten Aspektes der Erfindung wird die Aufgabe gelöst, durch:
3. Mindestens ein beschaufelter Rotor BR als Bestandteil einer Triebwerksanordnung E , auf welchen mindestens eine Antriebsleistung P aufgekoppelt werden kann, und, welcher durch Rotation in einem Fluid F zumindest eine Druckänderung in einem Teil des Fluides PF hervorrufen kann mit der Folge, dass sich mindestens ein Fluidmassenstrom FMS bewegen kann, wobei
in mindestens einem der bewegten Fluidmassenströme mindestens eine Statoreinrichtung SD angeordnet ist, dadurch gekennzeichnet, dass:
diese Statoranordnung SD mindestens ein Blatt B umfasst, welches im Einstellwinkel Al veränderbar ist, so, dass es in Bezug zur fluiddynamischen Abströmung VR des mindestens einen beschaufelten Rotors BR so angeströmt werden kann, dass das Blatt B eine resultierende Strömungskraft RF erzeugen kann, die eine Kraftkomponente VOR in Richtung der Drehachse AR des beschaufelten Rotors BR hat.

Gemäß eines vierten Aspektes der Erfindung wird die Aufgabe gelöst, durch:
4. Ein Turbofantriebwerk TF mit mindestens einem Nebenstrom BP, diese umfassend:
mindestens ein beschaufelter Rotor BR , auf welchen mindestens eine Antriebsleistung P aufgekoppelt werden kann, und, welcher durch Rotation in einem Fluid F zumindest eine Druckänderung in einem Teil des Fluides PF in mindestens einem Nebenstrom BP des Turbofantriebwerkes TF hervorrufen kann mit der Folge, dass sich mindestens ein Fluidmassenstrom FMS bewegen kann, wobei
in mindestens einer der bewegten Fluidmassenströme im Nebenstrom BP mindestens eine Statoreinrichtung SD angeordnet ist, dadurch gekennzeichnet, dass:
   diese Statoranordnung SD mindestens ein Blatt B umfasst, welches im Einstellwinkel Al veränderbar ist, so, dass es in Bezug zur fluiddynamischen Abströmung VR des mindestens einen beschaufelten Rotors BR so angeströmt werden kann, dass das Blatt B eine resultierend eStrömungskraft RF erzeugen kann, die eine Kraftkomponente VOR in Richtung der resultierenden Saugkraft SFR des beschaufelten Rotors BR hat.

Gemäß eines fünften Aspektes der Erfindung wird die Aufgabe gelöst, durch:
5. Ein umhülltes Triebwerk DE mit mindestens einem Propulsor PROP, der in mindestens einem Strom STR radial abseits des Nabenteils NA wirken kann, dadurch gekennzeichnet, dass

In mindestens einem Strom STR des umhüllten Triebwerkes DE stromabwärts des Propulsors PROP mindestens eine Statoreinrichtung SD eingebracht ist, welche mindestens ein Blatt B umfasst, welches im Einstellwinkel AI veränderbar ist, so, dass es in Bezug - zur fluiddynamischen Abströmung des Propulsors - VPROP so angeströmt werden kann, dass das Blatt B eine resultierende Strömungskraft RF erzeugen kann, die eine Kraftkomponente VOR in Richtung der Schubkraft THR des umhüllten Triebwerkes DE aufweisen kann.

Gemäß eines sechsten Aspektes der Erfindung wird die Aufgabe gelöst, durch:
6. Ein Turbofantriebwerk TF mit mindestens einem Fan F , der in mindestens einem Nebenstrom BP wirken kann, dadurch gekennzeichnet, dass
in mindestens einem Nebenstrom BP des Turbofantriebwerkes TF stromabwärts des Fans F mindestens eine Statoreinrichtung SD eingebracht ist, welche mindestens ein Blatt B umfasst, welches im Einstellwinkel Al veränderbar ist, so, dass es in Bezug zur fluiddynamischen Abströmung VF des Fans F so angeströmt werden kann, dass das Blatt B eine resultierend Strömungskraft RF erzeugen kann, die eine Kraftkomponente D in Gegenrichtung der Schubkraft des Kernstromes aufweisen kann, so dass sich im Verständnis einer Schubumkehr eine Bremskraft BRAKE ergeben kann .

Eine beispielhafte vorzugsweise Ausführungsvariante besteht in:
7. Einrichtung nach wenigstens einem der Ideen 1- 6, oder einer Kombination dieser, dadurch gekennzeichnet, dass die fluiddynamische Abströmung VB mindestens eines Blattes B mindestens einer Statoreinrichtung SD deutlich richtungsverschieden zur Abströmungsrichtung EX des Fluides F aus dem Turbofantriebwerk TF oder der Triebwerksanordnung E ist, und zu dieser einen deutlichen Winkel aufweist ANG oder dass die fluiddynamische Abströmung VB mindestens eines Blattes B mindestens einer Statoreinrichtung SD deutlich richtungsverschieden zur ungestörten Zuströmungsrichtung INE des Fluides F zum Turbofantriebwerk TF oder zu der Triebwerksanordnung E ist, und zu dieser einen deutlichen Winkel aufweist ANG , und somit zu eben dieser nicht antiparallel ist.

Eine weiter beispielhafte vorzugsweise Ausführungsvariante besteht in:
8. Einrichtung nach wenigstens einem der Ideen 1 - 7, oder einer Kombination dieser, dadurch gekennzeichnet, dass mindestens eine Statoreinrichtung SD mehrere Blätter B umfasst.

Eine weiter beispielhafte vorzugsweise Ausführungsvariante besteht in:
9. Einrichtung nach wenigstens einem der Ideen 1 - 8, oder einer Kombination dieser, dadurch gekennzeichnet, dass die jeweilige fluiddynamische Abströmungsrichtung VIB mehrerer Blätter B der Statoreinrichtung SD zueinander uneinheitlich ist und nicht in eine gemeinsame Richtung erfolgt.

Eine weiter beispielhafte vorzugsweise Ausführungsvariante besteht in:
10. Einrichtung nach wenigstens einem der Ideen 1- 9, oder einer Kombination dieser, dadurch gekennzeichnet, dass die Einstellwinkeländerung AI mindestens eines der Blätter B durch mindestens einen Aktuator A erfolgen kann.

Eine weiter beispielhafte vorzugsweise Ausführungsvariante besteht in:
11. Einrichtung nach wenigstens einem der Ideen 1- 10, oder einer Kombination dieser, dadurch gekennzeichnet, dass mindestens eine weitere Statoreinrichtung FS - in Folge - die Abströmung mindestens einer Statoreinrichtung SD begradigt so, dass die Abströmung des Fluidmassenstroms einheitlich in eine Richtung erfolgt.

Eine weiter beispielhafte vorzugsweise Ausführungsvariante besteht in:
12. Einrichtung nach wenigstens einem der Ideen 1-11, oder einer Kombination dieser, dadurch gekennzeichnet, dass die fluiddynamische Abströmung VB mindestens eines Blattes B mindestens einer Statoreinrichtung SD deutlich richtungsverschieden zur Drehachse AR des beschaufelten Rotors BR ist, welcher durch seine Wirkung mit dafür verantwortlich ist, das sich mindestens ein Fluidmassenstrom FMS durch mindestens diese eine Statoreinrichtung SD bewegt.

Eine weiter beispielhafte vorzugsweise Ausführungsvariante besteht in:
13. Einrichtung nach wenigstens einem der Ideen 1- 12, oder einer Kombination dieser, dadurch gekennzeichnet, dass mindestens ein beschaufelter Rotor BR mindestens eine Antriebsleistung P erhalten kann von mindestens einer Motoreneinrichtung M , wobei mindestens eine Motoreneinrichtung M durch mindestens eine Turbomaschine, mindestens eine Verbrennungsmotoreinrichtung, durch mindestens einem Elektromotor, durch mindestens eine Gasturbine, durch mindestens einen pneumatischen Motor, durch mindestens einen hydraulischen Motor oder durch eine beliebige Kombination mindestens einer dieser Elemente mit mindestens einem weiteren gebildet wird, wobei ein weiteres Element auch durch mindestens einen weiteren Motor gebildet werden kann.

Eine weiter beispielhafte vorzugsweise Ausführungsvariante besteht in:
14. Einrichtung nach wenigstens einem der Ideen 1- 13, oder einer Kombination dieser, wobei ein Fluid durch Wasser oder durch Luft gebildet wird.

Eine weiter beispielhafte vorzugsweise Ausführungsvariante besteht in:
15. Fahrzeug mit mindestens einer Einrichtung nach wenigstens einem der Ideen 1- 14, oder einer Kombination dieser.

Eine weiter beispielhafte vorzugsweise Ausführungsvariante besteht in:
16. Einrichtung nach wenigstens einem der Ideen 1 - 15, oder einer Kombination dieser, dadurch gekennzeichnet, dass mindestens ein Blatt B mindestens einer Statoreinrichtung SD mindestens eine Einrichtung umfasst, mindestens zur Vermeidung von Eisansatz.

Eine weiter beispielhafte vorzugsweise Ausführungsvariante besteht in:
17. Einrichtung nach wenigstens einem der Ideen 1- 16, oder einer Kombination dieser, zur Erzeugung einer Auftriebskraft, einer Vortriebskraft, einer Bremskraft, oder einer Manöverkraft.

Gemäß eines weiteren Aspektes der Erfindung wird die Aufgabe gelöst durch:
18. Verwendung einer Einrichtung oder eines Fahrzeuges nach wenigstens einem der Ideen 1- 17, oder einer Kombination dieser.

Mindestens eine Schauafel eines Stators oder Rotors kann mindestens entsprechend der beispielhaften Parameter: Profilgeometrie, Profiltiefe, Wölbung, Profildicke, Pfeilung, Einstellwinkel, Zuspitzung, Oberflächenrauhigkeit aerodynamisch ausgelegt sein. Auch können Parameter im jeweils lokalen Profilschnitt individuell gewählt sein. Es kann sich über zumindest Teile des Blattes eine aerodynamsiche und/oder geometrische Verwindung ergeben, sowie auch ein Pfeilung, Geschwungenheit der Vorder und /oder Hinterkante. Auch können Vorderkante und/ oder Hinterkante gepfeilt sein, Zacken- oder auch gerundete Tranlationsmuster aufweisen, die auch zueinander variieren können. Vorderkanten und Hinterkanten können Knicke aufweisen.

In einer weiteren beispielhaften Ausführungsvariante können auch am mindestens einem beschaufelten Rotor die Rotorblätter im Einstellwinkel verstellt werden. Dazu können auch Aktuatoren zum Einsatz kommen.

In einer weiteren beispielhaften Ausführungsvariante können die Blätter B bzw. das Blatt B der Statoreinrichtung SD so im Hinblick auf seine fluidmechanische Anströmung eingestellt oder geregelt werden, dass sich vor dem Hintergrund einer möglichen Schubablage, ein guter Kompromiss für die Krafterzeugung ergibt. Dies kann auch der beste Kompromiss sein.

In einer weiteren beispielhaften Ausführungsvariante können zumindest einige der Blätter B am Nabenteil einer Triebwerksanordnung E oder eines Turbofantriebwerks befestigt sein.

In einer weiteren beispielhaften Ausführungsvariante können zumindest einige der Blätter B einer Triebwerksumhüllung einer Triebwerksanordnung E oder eines Turbofantriebwerks TF alleinig ioder zusätzlich befestigt sein. Diese kann auch durch den Einlauf gebildet werden.

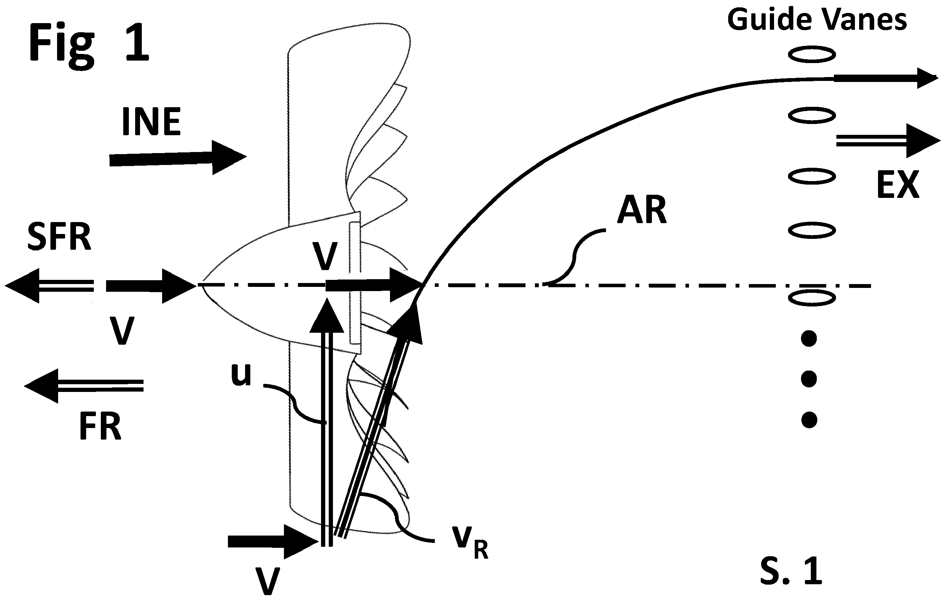

Zeichnung 1 zeigt den Stand der Technik im Nebenstrom eines Turbofantriebwerkes, prinzipiell. Die vom Fan unter einem Winkel abströmende Luft tritt über das in einige Entfernung liegende Leitgittergitter (sogenannte guide vanes), das stromabwärts in einiger Entfernung zum Fan liegt, in eine Richtung einheitlich gerichtet aus.

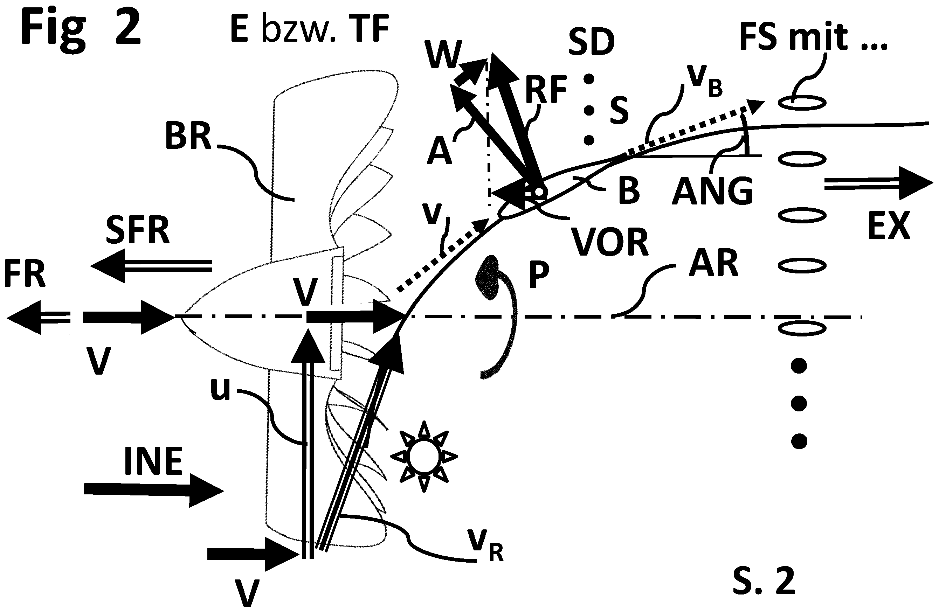

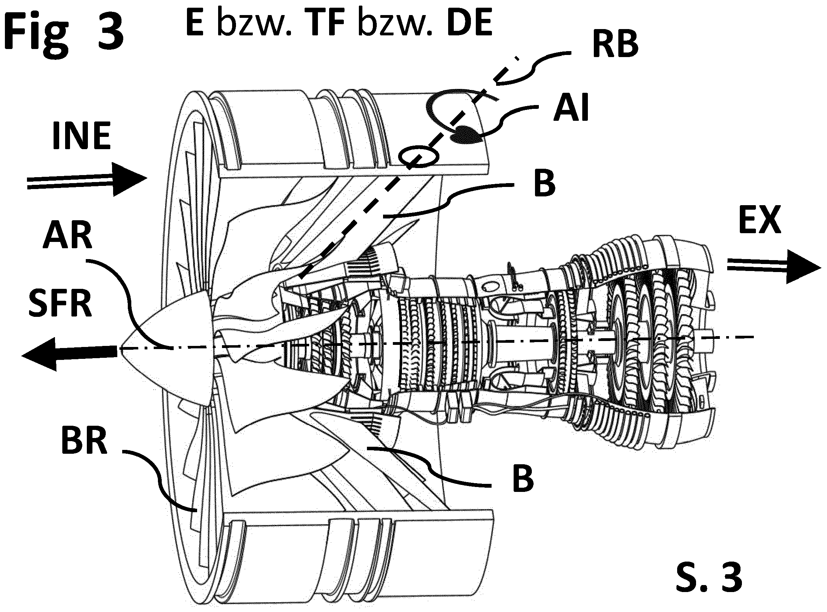

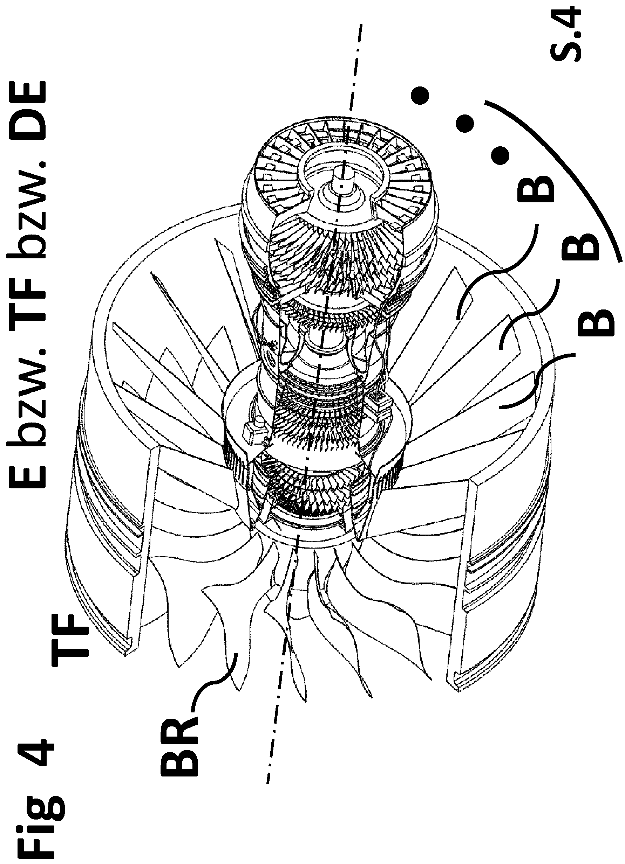

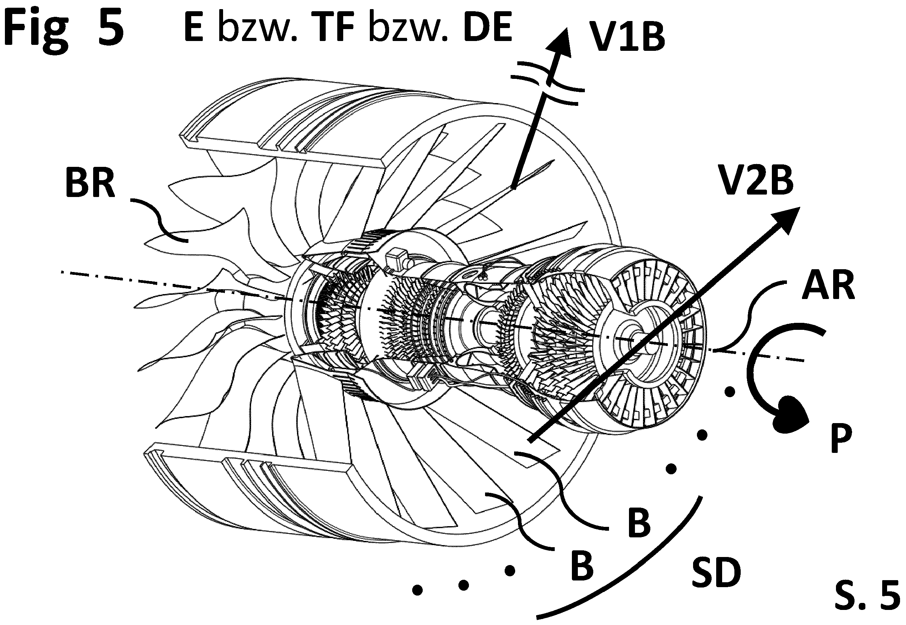

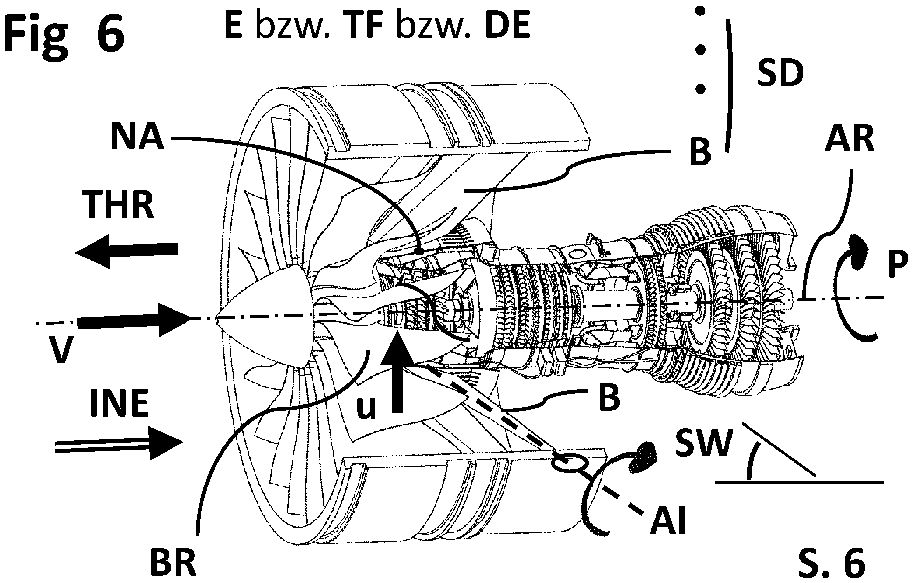

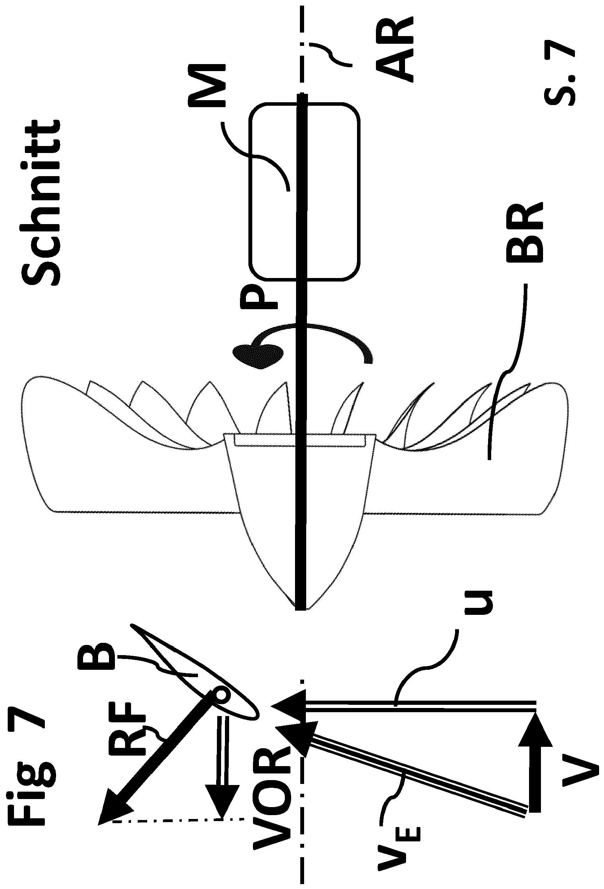

Zeichnung 2-6 zeigt einen Aspekt der erfinderischen Idee, in der unter Abströmung des Fans/Propulsors/beschaufelten Rotors nun dort, in einem Bereich, in dem die Strömung zur ursprünglichen Eingangsrichtung einen gewissen Winkel einnimmt, ein geeigneter Tragflächenabschnitt als Blatt B als Bestandteil einer Statoreinrichtung SD so eingebracht, dass er unter Eigenwiderstand eine geeignete Strömungskraft erzeigen kann, die eine maßgebliche Kraftkomponente in Flugrichtung, bzw. antiprallel nach vorne in Bezug zur Zuströmungsrichtung INE des Triebwerkes aufweist. Die aerodynamische Abströmung selbst vom Blatt B erfolgt unter einem Winkel zur Flugrichtung, zur ursprünglichen Zuströmrichtung des Fans/Propulsors/beschaufelten Rotors und zur Rotoarachse des Fans/Propulsors/beschaufelten Rotors und ist bei mehreren Blättern B der Statoreinrichtung SD zueinander richtungsverschieden das heißt unheitlich. Gerade dieses kann als wichtige Erfindungseigenschaft gesehen werden, da auf diese Weise nennenswerte Vortriebskräfte durch Blätter B der Statoreinrichtung SD erzeugt werden können.

Die Zeichnungen zeigen beispielhafte Ausführungsformen, die in keiner Weise einschränkend sind, und darüber hinaus und auch in Abwandlung und Kombination zu weiteren Zeichnungen, zum Beschreibungsteil und zum Anspruchsteil gesehen werden können.

Die Patentansprüche sind formuliert in der Form der Möglichkeit des können, es soll mit eingeschlossen werden auch die Form des Aktives Passierens, also dass sich die Erfindung im Moment aktiv vollzieht.

## Patentansprüche

1. Mindestens ein beschaufelter Rotor (BR) als Bestandteil einer Triebwerksanordnung (E) , auf welchen mindestens eine Antriebsleistung (P) aufgekoppelt werden kann, und, welcher durch Rotation in einem Fluid (F) zumindest eine Druckänderung in einem Teil des Fluides (PF) hervorrufen kann mit der Folge, dass sich mindestens ein Fluidmassenstrom (FMS) bewegen kann, wobei
in mindestens einem der bewegten Fluidmassenströme mindestens eine Statoreinrichtung (SD) angeordnet ist, **dadurch gekennzeichnet, dass**:
diese Statoranordnung (SD) mindestens ein Blatt (B) umfasst, welches im Einstellwinkel (Al) veränderbar ist, so, dass es in Bezug zur fluiddynamischen Abströmung (VR) des mindestens einen beschaufelten Rotors (BR) so angeströmt werden kann, dass das Blatt (B) eine resultierende Strömungskraft (RF) erzeugen kann, die eine Kraftkomponente (VOR) in Richtung der resultierenden Saugkraft (SFR) des beschaufelten Rotors (BR) hat.

2. Mindestens ein beschaufelter Rotor (BR) als Bestandteil einer Triebwerksanordnung (E), auf welchen mindestens eine Antriebsleistung (P) aufgekoppelt werden kann, und, welcher durch Rotation in einem Fluid (F) zumindest eine Druckänderung in einem Teil des Fluides (PF) hervorrufen kann mit der Folge, dass sich mindestens ein Fluidmassenstrom (FMS) bewegen kann, wobei
in mindestens einem der bewegten Fluidmassenströme mindestens eine Statoreinrichtung (SD) angeordnet ist, **dadurch gekennzeichnet, dass**:
diese Statoranordnung (SD) mindestens ein Blatt (B) umfasst, welches im Einstellwinkel (Al) veränderbar ist, so, dass es in Bezug zur fluiddynamischen Zuströmung (VE) des mindestens einen beschaufelten Rotors (BR) so angeströmt werden kann, dass das Blatt (B) eine resultierende Strömungskraft (RF) erzeugen kann, die eine Kraftkomponente (VOR) in Richtung der resultierenden Saugkraft (SFR) des beschaufelten Rotors (BR) hat.

3. Mindestens ein beschaufelter Rotor (BR) als Bestandteil einer Triebwerksanordnung (E) , auf welchen mindestens eine Antriebsleistung (P) aufgekoppelt werden kann, und, welcher durch Rotation in einem Fluid (F) zumindest eine Druckänderung in einem Teil des Fluides (PF) hervorrufen kann mit der Folge, dass sich mindestens ein Fluidmassenstrom (FMS) bewegen kann, wobei
in mindestens einem der bewegten Fluidmassenströme mindestens eine Statoreinrichtung (SD) angeordnet ist, **dadurch gekennzeichnet, dass**:
diese Statoranordnung (SD) mindestens ein Blatt (B) umfasst, welches im Einstellwinkel (Al) veränderbar ist, so, dass es in Bezug zur fluiddynamischen Abströmung (VR) des mindestens einen beschaufelten Rotors (BR) so angeströmt werden kann, dass das Blatt (B) eine resultierende Strömungskraft (RF) erzeugen kann, die eine Kraftkomponente (VOR) in Richtung der Drehachse (AR) des beschaufelten Rotors (BR) hat.

4. Ein Turbofantriebwerk (TF) mit mindestens einem Nebenstrom (BP), diese umfassend:
mindestens ein beschaufelter Rotor (BR), auf welchen mindestens eine Antriebsleistung (P) aufgekoppelt werden kann, und, welcher durch Rotation in einem Fluid (F) zumindest eine Druckänderung in einem Teil des Fluides (PF) in mindestens einem Nebenstrom (BP) des Turbofantriebwerkes (TF) hervorrufen kann mit der Folge, dass sich mindestens ein Fluidmassenstrom (FMS) bewegen kann, wobei
in mindestens einer der bewegten Fluidmassenströme im Nebenstrom (BP) mindestens eine Statoreinrichtung (SD) angeordnet ist, **dadurch gekennzeichnet, dass**:
diese Statoranordnung (SD) mindestens ein Blatt (B) umfasst, welches im Einstellwinkel (Al) veränderbar ist, so, dass es in Bezug zur fluiddynamischen Abströmung (VR) des mindestens einen beschaufelten Rotors (BR) so angeströmt werden kann, dass das Blatt (B) eine resultierend eStrömungskraft (RF) erzeugen kann, die eine Kraftkomponente (VOR) in Richtung der resultierenden Saugkraft (SFR) des beschaufelten Rotors (BR) hat.

5. Ein umhülltes Triebwerk (DE) mit mindestens einem Propulsor (PROP), der in mindestens einem Strom (STR) radial abseits des Nabenteils (NA) wirken kann, **dadurch gekennzeichnet, dass**
In mindestens einem Strom (STR) des umhüllten Triebwerkes (DE) stromabwärts des Propulsors (PROP) mindestens eine Statoreinrichtung (SD) eingebracht ist, welche mindestens ein Blatt (B) umfasst, welches im Einstellwinkel (Al)veränderbar ist, so, dass es in Bezug - zur fluiddynamischen Abströmung des Propulsors - (VPROP) so angeströmt werden kann, dass das Blatt (B) eine resultierende Strömungskraft (RF) erzeugen kann, die eine Kraftkomponente (VOR) in Richtung der Schubkraft (THR) des umhüllten Triebwerkes (DE) aufweisen kann.

6. Ein Turbofantriebwerk (TF) mit mindestens einem Fan (F), der in mindestens einem Nebenstrom (BP) wirken kann, **dadurch gekennzeichnet, dass**
in mindestens einem Nebenstrom (BP) des Turbofantriebwerkes (TF) stromabwärts des Fans (F) mindestens eine Statoreinrichtung (SD) eingebracht ist, welche mindestens ein Blatt (B) umfasst, welches im Einstellwinkel (Al) veränderbar ist, so, dass es in Bezug zur fluiddynamischen Abströmung (VF) des Fans (F) so angeströmt werden kann, dass das Blatt (B) eine resultierend Strömungskraft (RF) erzeugen kann, die eine Kraftkomponente (D) in Gegenrichtung der Schubkraft des Kernstromes aufweisen kann, so dass sich im Verständnis einer Schubumkehr eine Bremskraft (BRAKE) ergeben kann .

7. Einrichtung nach wenigstens einem der Ansprüche 1- 6, oder einer Kombination dieser, **dadurch gekennzeichnet, dass** die fluiddynamische Abströmung (VB) mindestens eines Blattes (B) mindestens einer Statoreinrichtung (SD) deutlich richtungsverschieden zur Abströmungsrichtung (EX) des Fluides (F) aus dem Turbofantriebwerk (TF) oder der Triebwerksanordnung (E) ist, und zu dieser einen deutlichen Winkel aufweist (ANG) oder dass die fluiddynamische Abströmung (VB) mindestens eines Blattes (B) mindestens einer Statoreinrichtung (SD) deutlich richtungsverschieden zur ungestörten Zuströmungsrichtung (INE) des Fluides (F) zum Turbofantriebwerk (TF) oder zu der Triebwerksanordnung (E) ist, und zu dieser einen deutlichen Winkel aufweist (ANG), und somit zu eben dieser nicht antiparallel ist.

8. Einrichtung nach wenigstens einem der Ansprüche 1 - 7, oder einer Kombination dieser, **dadurch gekennzeichnet, dass** mindestens eine Statoreinrichtung (SD) mehrere Blätter (B) umfasst.

9. Einrichtung nach wenigstens einem der Ansprüche 1 - 8, oder einer Kombination dieser, **dadurch gekennzeichnet, dass** die jeweilige fluiddynamische Abströmungsrichtung (VIB) mehrerer Blätter (B) der Statoreinrichtung (SD) zueinander uneinheitlich ist und nicht in eine gemeinsame Richtung erfolgt.

10. Einrichtung nach wenigstens einem der Ansprüche 1- 9, oder einer Kombination dieser, **dadurch gekennzeichnet, dass** die Einstellwinkeländerung (AI) mindestens eines der Blätter (B) durch mindestens einen Aktuator (A) erfolgen kann.

11. Einrichtung nach wenigstens einem der Ansprüche 1- 10, oder einer Kombination dieser, **dadurch gekennzeichnet, dass** mindestens eine weitere Statoreinrichtung (FS) - in Folge - die Abströmung mindestens einer Statoreinrichtung (SD) begradigt so, dass die Abströmung des Fluidmassenstroms einheitlich in eine Richtung erfolgt.

12. Einrichtung nach wenigstens einem der Ansprüche 1-11, oder einer Kombination dieser, **dadurch gekennzeichnet, dass** die fluiddynamische Abströmung (VB) mindestens eines Blattes (B) mindestens einer Statoreinrichtung (SD) deutlich richtungsverschieden zur Drehachse (AR) des beschaufelten Rotors (BR) ist, welcher durch seine Wirkung mit dafür verantwortlich ist, das sich mindestens ein Fluidmassenstrom (FMS) durch mindestens diese eine Statoreinrichtung (SD) bewegt.

13. Einrichtung nach wenigstens einem der Ansprüche 1- 12, oder einer Kombination dieser, **dadurch gekennzeichnet, dass** mindestens ein beschaufelter Rotor (BR) mindestens eine Antriebsleistung (P) erhalten kann von mindestens einer Motoreneinrichtung (M), wobei mindestens eine Motoreneinrichtung (M) durch mindestens eine Turbomaschine, mindestens eine Verbrennungsmotoreinrichtung, durch mindestens einem Elektromotor, durch mindestens eine Gasturbine, durch mindestens einen pneumatischen Motor, durch mindestens einen hydraulischen Motor oder durch eine beliebige Kombination mindestens einer dieser Elemente mit mindestens einem weiteren gebildet wird, wobei ein weiteres Element auch durch mindestens einen weiteren Motor gebildet werden kann.

14. Einrichtung nach wenigstens einem der Ansprüche 1- 13, oder einer Kombination dieser, wobei ein Fluid durch Wasser oder durch Luft gebildet wird.

15. Fahrzeug mit mindestens einer Einrichtung nach wenigstens einem der Ansprüche 1- 14, oder einer Kombination dieser.
